(19) Europäisches Patentamt
European Patent Office
Office européen des brevets

(11) EP 0 916 696 A1

(12) EUROPEAN PATENT APPLICATION

(43) Date of publication:
**19.05.1999 Bulletin 1999/20**

(21) Application number: **98309215.6**

(22) Date of filing: **11.11.1998**

(51) Int Cl.6: **C08K 7/18**, C08L 67/02, C08J 5/18 // (C08L67/02, 67:02, 101:00)

(84) Designated Contracting States:
**AT BE CH CY DE DK ES FI FR GB GR IE IT LI LU MC NL PT SE**
Designated Extension States:
**AL LT LV MK RO SI**

(30) Priority: **12.11.1997 JP 310342/97**

(71) Applicant: **TEIJIN LIMITED**
**Osaka-shi, Osaka 541-0054 (JP)**

(72) Inventors:
- **Kosuge, Masahiko, c/o Teijin Limited Matsuyama-shi, Ehime 791-8041 (JP)**
- **Kameoka, Akira, c/o Teijin Limited Matsuyama-shi, Ehime 791-8041 (JP)**

(74) Representative: **Votier, Sidney David et al**
**CARPMAELS & RANSFORD**
**43, Bloomsbury Square**
**London WC1A 2RA (GB)**

# (54) Slurry of spherical fine particles, and polyester composition and film obtained therefrom

(57) A slurry comprising spherical fine particles which have an average particle diameter of 1.5 μm or less and a dispersion medium dispersing the spherical fine particles, the amount of the residue of the slurry after filtration with a straight-hole membrane filter having hole openings of nominal opening size of 3 μm being 0.01 wt% or less based on the total weight of all the fine particles and the residue containing only a maximum of 5 spherical residual particles based on one million particles out of all the fine particles. The slurry is useful for the preparation of a polyester composition which gives a film having controlled surface properties and a polyester film having an extremely small number of coarse protrusions derived from coarse particles.

EP 0 916 696 A1

## Description

Detailed Description of the Invention

The present invention relates to a slurry of spherical fine particles and to a polyester composition and a film obtained therefrom. More specifically, it relates to a slurry which contains an extremely small number of coarse particles, agglomerates or the like in spherical fine particles dispersed therein and is advantageously added to a polyester; a polyester composition produced from the slurry; and a film which has an extremely small number of coarse protrusions and excellent surface properties.

In general, a polyester, particularly polyethylene terephthalate is widely used for films and fibers due to its excellent mechanical and chemical properties.

However, when a film or fiber which makes use of the transparency and brightness of the polyester is to be produced, a failure occurs frequently in its molding or processing step. The cause of the failure is mostly due to a large friction coefficient.

As a means of reducing the friction coefficient of a polyester film, there has been proposed a method for having fine particles contained in a polyester. Since organic polymer particles as the fine particles have higher affinity for a polymer than inorganic particles, various types of organic polymer particles have been proposed. Of these, proposals on spherical particles which can provide both traveling property and protrusion uniformity (flatness) on the surface have been made.

JP-A 8-225717 (the term "JP-A" as used herein means an "unexamined published Japanese patent application") discloses a polyester composition comprising organic polymer particles which have a relative standard deviation of particle diameter of 0.5 or less and contain less than 100 coarse particles having a particle diameter 5 times or more the average particle diameter based on one million particles out of all the particles. The above publication recites that it is desired to use a filter having a filtration accuracy of 5 times or less, preferably 2 times or less, more preferably 1.2 times or less the average particle diameter of the particles when the above particles are prepared by filtration. Examples in the publication show that a water dispersion of organic polymer particles with an average particle diameter of 0.45 μm obtained by a seed polymerization method was prepared by filtration with a filter having a removal rate, for particles having a diameter of 0.5 μm, of 50 %.

JP-A 63-191838 discloses use of spherical silicone resin fine particles and JP-A 1-129038 discloses spherical cross-linked polystyrene particles.

According to studies conducted by the inventors of the present invention, spherical coarse particles, agglomerates, particles having irregular shape and the like are by-produced in very small quantities in the conventional production process of spherical organic polymer particles. Although the filtration of a slurry of spherical organic polymer particles is generally effective to reduce these, it is difficult to greatly reduce the number of spherical coarse particles, whose size is represented by the unit of μm, and the like and to suppress clogging of a filter at the same time, at the time of filtering the slurry. Therefore, the filtration of the slurry is not optimized.

The preparation of a slurry of these particles to be added to a polyester involves such a problem that spherical coarse particles, agglomerates and the like remain in the slurry. If these are contained in a polyester, for example, if a film is formed from the polyester, coarse protrusions are formed on the surface of the film and a magnetic recording medium made from such film causes drop outs, which becomes a particularly serious defect in the application in high-density magnetic recording media of the slurry of these days. Particularly, since the spherical coarse particles form coarse protrusions when they are contained in the slurry, they still exhibit a large influence on a film even if contained in very small quantities. This problem occurs when protrusions are formed not only on a magnetic-layer side of a single-layer film but also on a traveling-surface side of a laminate film formed by a co-extrusion method. The existence of coarse protrusions exerts a bad influence on the flat-surface side (magnetic-layer side) of a film by transfer when the film is wound up into a roll. In addition, it is extremely difficult to determine the quantity of spherical coarse particles in the slurry by general grain size measurement because they are contained in very small quantities. Therefore, the relationship between the number of coarse particles contained in the slurry and the number of coarse protrusions on the surface of the film is not always clear.

The present inventors have further studied the above problem and has found that the above problem is caused by extremely small amounts of spherical coarse particles, agglomerates and the like contained in the slurry and can be solved by reducing the large amounts of these.

It is therefore an object of the present invention to provide a slurry of spherical fine particles having extremely small contents of spherical coarse particles and agglomerates.

It is another object of the present invention to provide a polyester composition which gives a film having controlled surface properties by using the above slurry of spherical fine particles of the present invention which has extremely small contents of spherical coarse particles and agglomerates.

It is still another object of the present invention to provide a polyester film having an extremely small number

of coarse protrusions derived from coarse particles.

Other objects and advantages of the present invention will become apparent from the following description.

According to the present invention, the above objects and advantages of the present invention can be attained by a slurry comprising spherical fine particles which have an average particle diameter of 1.5 μm or less and a dispersion medium dispersing the spherical fine particles, the amount of the residue of the slurry after the filtration of the slurry with a straight-hole membrane filter having hole openings of nominal opening size of 3 μm being 0.01 wt% or less based on the total weight of all the fine particles and the residue containing only a maximum of 5 spherical residual particles based on one million particles out of all the fine particles.

The present invention will be described in detail hereinafter.

The material of the spherical fine particles may be either an inorganic material or an organic material. Known inert fine particles which are generally added to a polyester for forming a film are preferably used.

Inorganic particles include, for example, silicon oxide, titanium oxide, calcium carbonate, zirconium oxide, iron oxide and the like. Organic particles include, for example, organic polymer particles such as cross-linked polystyrene, silicone, silicone rubber, melamine/formaldehyde copolymer, benzoguanamine, thermosetting epoxy, cross-linked polyester and the like.

The shape of the inert fine particle is preferably globular, more preferably spherical, which is effective in providing slipperiness to a film. The spherical fine particles have a ratio of the maximum diameter to the minimum diameter of 1.0 to 1.2.

The organic polymer particles are produced, for example, by emulsion polymerization, soap-free emulsion polymerization, seed emulsion polymerization, suspension polymerization, dispersion polymerization, two-stage expansion polymerization and the like. The particles are not limited to solid particles made from a single organic material and include composite particles (core-shell type) comprising different types of organic polymers, composite particles comprising inorganic and organic polymers (for example, (1) the surface of an organic particle is coated with an inorganic compound, (2) a metal or a metal bond is partially integrated in a particle structure, and so on), hollow particles, and the like. These particles may be used after a surface treatment with a silane coupling or titanate coupling agent.

These inert particles may be used alone on in a combination of two or more in the present invention. Of these, organic polymer particles are preferred because they have excellent affinity for polymers, and silicone resin particles and cross-linked polystyrene particles are particularly preferred because they have excellent heat resistance.

The spherical silicone resin particle is not particularly limited in its structure but is preferably, for example, a spherical silicone resin particle containing 80 wt% or more of a bond unit represented by the following formula (1):

$$RSiO_{3/2} \qquad (1)$$

wherein R is at least one member selected from an alkyl group having 1 to 6 carbon atoms and a phenyl group.

The above bond unit means the following structural formula:

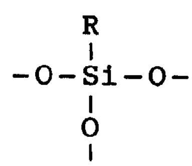

where R is the same as defined in the above formula.

Processes for producing the spherical silicone resin particle are known and include, for example, a process comprising hydrolyzing and condensing organotrialkoxysilane (as disclosed by JP-B 40-14917 or JP-B 2-22767) (the term "JP-B" as used herein means an "examined Japanese patent publication"), a process for producing polymethylsilylsesquioxane fine particles from methyltrichlorosilane as a starting material (as disclosed by Belgium Patent No. 572412) and the like.

R in the above formula (1) is at least one member selected from an alkyl group having 1 to 6 carbon atoms and a phenyl group. Illustrative examples of the alkyl group include methyl group, ethyl group, propyl group, butyl group, pentyl group, hexyl group and the like. They maybe used alone or in combination of two or more. When R is a combination of a plurality of groups, for example, a combination of methyl group and ethyl group, a spherical silicone resin particle can be obtained from a mixture of methyltrimethoxysilane and ethyltrimethoxysilane as a starting material. Taking low production cost and the ease of synthesis into consideration, a silicone resin fine particle (polymethylsilylsesquioxane) in which R is a methyl group is preferred.

The spherical silicone resin particles are produced by emulsion polymerization, dispersion polymerization, soap-free emulsion polymerization, seed polymerization or the like. Of these, the particles produced in the presence of a surfactant are preferred because they do not contain many coarse particles.

The surfactant is preferably anionic or nonionic. Anionic surfactants include sodium alkyl benzenesulfonate (in which an alkyl group has 4 to 20, preferably 8 to 15 carbon atoms), alkyl sulfate (in which an alkyl group has 4 to 20 carbon atoms), fatty acid soap, and the like. Of these, sodium alkylsulfonate such as sodium dodecylbenzenesulfonate is preferred.

Nonionic surfactants include polyoxyethylene alkyl ethers (in which an alkyl group has 4 to 15 carbon atoms), polyoxyethylene alkyl phenyl ethers (in which an alkyl group has 4 to 15 carbon atoms), polyoxyethylene sorbitan fatty acid esters, and the like. Of these, polyoxyethylene alkyl phenyl ethers such as an addition product of a nonylphenol with ethylene oxide are preferred. They may be used alone or in combination of two or more. A combination of a nonionic surfactant and an anionic surfactant is more preferred.

When spherical silicone resin particles are produced without using the surfactant, the number of coarse particles having irregular shape increases and clogging easily occur in the filtering step in the preparation of a slurry.

Spherical cross-linked polystyrene particles are produced, for example, by preparing an emulsion of polymer particles though emulsion polymerization of a styrene derivative monomer such as a styrene monomer, methyl styrene monomer, $\alpha$-methyl styrene monomer or dichlorostyrene monomer and at least one monomer selected from the group consisting of conjugated diene monomer of butadiene, unsaturated nitrile monomer such as acrylonitrile, methacrylic acid ester monomer such as methyl methacrylate, functional monomer such as unsaturated carboxylic acid, monomer having a hydroxyl group such as hydroxyethyl methacrylate, monomer having an epoxide group such as glycidyl methacrylate and unsaturated sulfonic acid with a crosslinking agent for making polymer particles having three-dimensional structure, such as a functional vinyl compound exemplified by divinyl benzene, ethylene glycol dimethacrylate, trimethylol propane triacrylate or diallyl phthalate in an aqueous medium containing a water-soluble polymer as a protective colloid, and recovering the polymer particles from this emulsion.

The spherical fine particles in the present invention have an average particle diameter of 1.5 µm or less. When the average particle diameter is larger than 1.5 µm, clogging easily occurs during filtration with a filter having an absolute filtration rating, which will be described later, of 3 µm or less disadvantageously.

The spherical fine particles in the present invention are characterized in that the amount of a residue left after filtration with a straight-hole membrane filter having hole openings of nominal opening size of 3 µm is 0.01 wt% or less based on the total weight of all the fine particles and that the residue contains only a maximum of 5 spherical residual particles based on one million particles out of all the fine particles. When the number of the spherical residual particles contained in the residue is larger than 5 based on one million fine particles, a polyester film produced using such spherical fine particles has a large number of coarse protrusions derived from the spherical coarse particles with the result that drop outs are apt to be produced in a magnetic recording medium comprising the film as a base.

The proportion of the residual particles after filtration must be 0.01 wt% or less, preferably 0.005 wt% or less. when the proportion of the residue is higher than 0.01 wt%, a large number of coarse protrusions derived from spherical coarse particles and agglomerates are produced on the surface of the film with the result that drop outs are liable to be produced in a magnetic recording medium using the film.

The proportion (or amount) of the residue (wt%) is expressed by the following equation.

proportion of residue (wt%) = ((A-B)/C) $\times$ 100 wherein A is the weight of a filter after filtration of particles, B is the weight of a filter before filtration, and C is the weight of the particles used for filtration.

The proportion of the spherical residual particles (5 or less based on one million particles out of all the fine particles) is obtained from the number of the spherical residual particles which is calculated from the weight of filtered particles in the filtration of the slurry with a straight-hole membrane filter having hole openings of nominal opening size of 3 µm based on the average particle diameter and density of the particles (average particle diameter is obtained from an area circle equivalent diameter and the number of residual fine particles as completely spherical particles is calculated from the average particle diameter). The shape of the residual spherical particle remaining on the filter is, for example, a single sphere and/or an agglomerate of fine particles having, for example, a particle diameter ratio of 1.0 to 1.2.

The straight-hole membrane filter is a screen-type membrane filter having uniformly cylindrical straight holes. Although it is not important whether the filter hole is perpendicular to the plane of the membrane, it is preferred that the filter hole is perpendicular thereto. The shape of the hole in a direction perpendicular to the direction of the hole is circular or almost circular. For example, it is preferred that the ratio of the long diameter to the short diameter of a circular hole is 1.0 to 1.2. The hole density of the filter is preferably $2 \times 10^6$ to $3 \times 10^7$ pores/cm$^2$. The thickness of the filter is preferably 6 to 11 µm.

Other porous and fibrous filters are not preferred because, for example, a cake is produced on the surface of the filter and/or spherical coarse particles are buried into the filter.

The spherical fine particles in the present invention preferably have a relative standard deviation represented by the following equation of 0.5 or less, more preferably 0.3 or less, particularly preferably 0.12 or less.

$$\text{relative standard deviation} = \sqrt{\sum_{i=1}^{n} (Di-\bar{D})^2 / n} \Big/ \bar{D}$$

wherein Di is an area circle equivalent diameter of each particle (µm); $\bar{D}$ is an average value of area circle

$$\text{equivalent diameters } \{= (\sum_{i=1}^{n} Di)/n\}\ (\mu m),$$

and n is the number of measured particles.
When the relative standard deviation is larger than 0.5, the protrusion uniformity of a film prepared from the slurry of the spherical fine particles is unsatisfactory.
The spherical fine particles in the present invention have an average particle diameter of 1.5 µm or less, preferably 0.7 to 1.5 µm.
In spherical fine particles having an average particle diameter more than or equal to 0.2 µm and less than 0.7 µ m, a residue left after filtration with a straight-hole membrane filter having hole openings of nominal opening size of 2 µm preferably contains only a maximum of 100 spherical residual particles based on one million particles out of all the fine particles. In spherical fine particles having an average particle diameter more than or equal to 0.2 µm and less than 0.7 µm, the amount of the residue left after filtration with a straight-hole membrane filter having hole openings of opening size of 2 µm is preferably 0.01 wt% or less based on the total weight of all the fine particles.
In spherical fine particles having an average particle diameter less than 0.2 µm, a residue left after filtration with a straight-hole membrane filter having hole openings of nominal opening size of 0.6 µm preferably contains only a maximum of 500 spherical residual particles based on one million particles out of all the fine particles. In spherical fine particles having an average particle diameter less than 0.2 µm, the amount of the residue left after filtration with a straight-hole membrane filter having hole openings of nominal opening size of 0.6 µm is preferably 0.01 wt% or less based on the total weight of all the fine particles.
The slurry of the present invention comprises a dispersion medium for dispersing spherical fine particles. Although the dispersion medium is not particularly limited, a liquid medium is preferably used. After a solvent for the slurry is replaced by an organic solvent immediately after the synthesis of spherical organic polymer particles, the preparation of a slurry, which will be described later, may be carried out and the resulting slurry may be used, as the slurry of the present invention, directly or after the fine particles are extracted by filtration or centrifugation, washed, dried and dispersedly milled.
The dispersion medium for a slurry to be added to a polyester is not particularly limited and known media can be used. Illustrative examples of the dispersion medium include water, organic solvents and mixtures thereof. Of these, a glycol component which is a raw material of a polyester, particularly ethylene glycol is preferred from the viewpoint of costs, on the assumption that the dispersion medium is added at the time of producing a polyester. The concentration of the slurry is 40 wt% or less, preferably 30 wt% or less, more preferably 20 wt% or less. when the concentration is higher than 40 wt%, the viscosity of the slurry becomes high, thereby making filtration substantially difficult to carry out disadvantageously. The lower limit of the concentration of the slurry is preferably 5 wt% from the viewpoint of handling properties. The slurry may contain a dispersant, anti-foaming agent and the like in such amounts that do not impair the effect of the present invention.
Although a method of controlling the proportion of the residue and the proportion of spherical coarse particles to the values specified by the present invention or less is not particularly limited, it is preferably a known slurry preparation method such as dispersion, classification, milling or prefiltration. These methods may be used alone once or a plurality of times, and/or used in combination repeatedly. They are preferably carried out as a pretreatment before the preparation of a slurry with a filter having an absolute filtration accuracy, which will be described later, of 3 µm or less.
Further, it is preferred that the proportion of the residue left after the filtration of the prepared slurry with a straight-hole membrane filter having hole openings of nominal opening size of 3 µm is reduced to 0.05 wt% or less

because it suppresses clogging of the filter at the time of preparing the slurry using a filter having an absolute filtration accuracy of 3 µm or less. The proportion is more preferably reduced to 0.03 wt% or less. When the proportion of the residue is larger than 0.05 wt% at the time of filtration with a filter having an absolute filtration accuracy of 3 µm or less, clogging of the filter is liable to occur, and coarse particles and the like are apt to pass through the filter when the pressure of the filter is raised.

In this pretreatment, it is preferred to suppress the deformation such as cracking, crushing, fragmentation or the like of the particle itself, and the proportion of the deformed particles is 20 % or less, preferably 10 % or less, based on the total number of all the particles. When the proportion of the deformed particles is larger than 20 %, the protrusion-forming property deteriorates when a film is formed.

It is preferred to carried out the filtration of the slurry with a filter having an absolute filtration accuracy of 3 µm or less in the present invention because it is effective in removing spherical coarse particles, agglomerates and the like. Further, it is particularly preferred that filtration is carried out several times to reduce the number of coarse particles (the absolute filtration accuracy is based on a glass-bead passage test or a test method according to ANSI B93, 31-1973).

The slurry of the present invention is suitably used to produce a polyester film.

The mechanism to suppress the production of coarse protrusions when a polyester composition produced from the slurry of the present invention is formed into a film seems to be due to the fact that the number of spherical coarse particles in particular, which form coarse protrusions on the film, has been reduced to a specific value or less.

In the preparation of the slurry, it is preferred to reduce the proportion of the residue contained in the slurry in the pretreatment step and then to filter the slurry with a filter having an absolute filtration accuracy of 3 µm or less, whereby it is assumed that a reduction in the number of spherical coarse particles and the suppression of clogging of the filter are made possible simultaneously.

Therefore, according to the present invention, there is further provided a polyester composition that comprises 100 parts by weight of an aromatic polyester and 0.001 to 5 parts by weight of spherical fine particles having an average particle diameter of 1.5 µm or less and that contains only a maximum of 5 spherical particles having an average particle diameter more than 3 µm based on one million particles out of all the fine particles.

The aromatic polyester of the present invention is a polyester comprising an aromatic dicarboxylic acid as a main acid component and an aliphatic glycol as a main glycol component. The polyester is substantially linear and has film-forming property, particularly film-forming property by melt molding. Illustrative examples of the aromatic dicarboxylic acid include terephthalic acid, naphthalenedicarboxylic acid, isophthalic acid, diphenyl ketone dicarboxylic acid, anthracenedicarboxylic acid and the like. Illustrative examples of the aliphatic glycol include alkylene glycols having 2 to 10 carbon atoms such as ethylene glycol, trimethylene glycol, tetramethylene glycol, pentamethylene glycol, hexamethylene glycol and decamethylene glycol, aliphatic diols such as cyclohexane dimethanol, and the like.

In the present invention, a polymer comprising alkylene terephthalate and/or alkylene naphthalene dicarboxylate as a main constituent is preferably used as the polyester. Particularly preferred out of the above polyesters are polyethylene terephthalate, polyethylene-2,6-naphthalene dicarboxylate and a copolymer comprising terephthalic acid and/or 2,6-naphthalenedicarboxylic acid in an amount of 80 mol% or more of the total of all dicarboxylic acid components and ethylene glycol in an amount of 80 mol% or more of the total of all glycol components. The aromatic dicarboxylic acids other than terephthalic acid and/or 2,6-naphthalenedicarboxylic acid, such as aliphatic dicarboxylic acids exemplified by adipic acid and sebacic acid and alicyclic dicarboxylic acids exemplified by cyclohexane-1,4-dicarboxylic acid, can be contained in an amount of 20 mol% or less of the total of all acid components as long as they do not impair surface flatness and dry-heat deterioration resistance. The glycols other than ethylene glycol, such as aliphatic diols exemplified by hydroquinone, resorcin and 2,2-bis(4-hydroxyphenyl)propane, aliphatic diols having an aromatic ring exemplified by 1,4-dihydroxydimethylbenzene, and polyalkylene glycols (polyoxyalkylene glycols) exemplified by polyethylene glycol, polypropylene glycol and polytetramethylene glycol, can be contained in an amount of 20 mol% or less of the total of all glycol components. The polyester in the present invention also includes a polyester copolymerized or bonded with a component derived from an oxycarboxylic acid such as an aromatic oxyacid exemplified by hydroxybenzoic acid and an aliphatic oxyacid exemplified by ω-hydroxycaproic acid in an amount of 20 mol% or less of the total of a dicarboxylic acid component and an oxycarboxylic acid component as long as it does not impair the effect of the present invention.

The polyester in the present invention further includes a polyester comprising, as a copolymer component, a polycarboxylic acid having 3 or more functional groups or polyhydroxy compound such as trimellitic acid or pentaerythritol in an amount of, for example, 2 mol% or less of the total of all acid components as for as it is substantially linear and does not impair the effect of the present invention.

The polyester in the present invention may contain additives such as a lubricant, pigment, dye, fluorescent brightener, antistatic agent, flame retardant, antioxidant, optical stabilizer and light screening agent (such as carbon black or titanium oxide) as required in such amounts that do not impair the effect of the present invention.

Non-spherical inert fine particles, that is, other organic particles and/or inorganic particles are selected from

cross-linked polystyrene, silicone, silicone rubber, melamine/formaldehyde copolymer, benzoguanamine, thermosetting epoxy, cross-linked polyester and the like. Illustrative examples of the inorganic particle include silicon oxide, titanium oxide, calcium carbonate, zirconium oxide, kaolin, talc, iron oxide, aluminum oxide, carbon black and the like. The aluminum oxide may be of various crystal forms. Of these, α, γ, θ, δ and κ-type aluminum oxides are preferred, and γ θ and δ-type aluminum oxides are particularly preferred. Other fine particles preferably have an average particle diameter of 0.01 to 1.5 µm and are preferably contained in the polyester in an amount of 0.01 to 2 wt%.

The polyester is known per se and can be produced by a method known per se. The above polyester preferably has an intrinsic viscosity, measured at 35°C in o-chlorophenol, of about 0.4 to about 0.9.

In the present invention, the spherical fine particles may be dispersed in a polyester composition at any time. In the production process of a polyester, the slurry is added during the esterification reaction stage of a direct polymerization method in which terephthalic acid or 2,6-naphthalenedicarboxylic acid is used as a raw material or during the ester interchange reaction stage of an ester interchange method in which dimethylene terephthalate or dimethylene-2,6-naphthalene dicarboxylate is used as a raw material. Alternatively, there may be used a method in which a molten polyester and the particulate slurry of the present invention prepared by dispersing particles in a dispersion medium such as water or an organic solvent are mixed together, for example, in a vented extruder and the evaporated dispersion medium is removed through a vent. Methods for controlling the content of the fine particles include one in which the amount of the fine particles added is controlled based on the assumed content thereof in a film at the time of producing a polymer by the above method, one in which a highly concentrated master polymer is prepared by the above method and diluted with a polymer containing substantially no fine particles at the time of forming a film to control the content of the fine particles, and the like.

The amount of the spherical fine particles added to the polyester of the present invention is not particularly limited but is generally 0.001 to 5 wt%, preferably 0.005 to 2 wt%, based on the weight of the polyester. when the amount is too small, the slipperiness of the obtained film deteriorates, while when the amount is too large, the dispersibility of the particles in the polymer becomes unsatisfactory.

The spherical fine particles contained in the polyester composition of the present invention have an average particle diameter of 1.5 µm or less and contain only a maximum of 5 spherical particles having a particle diameter more than 3 µm based on one million particles out of all the fine particles.

The proportion of the spherical fine particles having a particle diameter more than 3 µm is obtained by calculating the number of the particles from both the number of residual particles on the filter when the polyester composition is dissolved in a solvent and/or depolymerized, taken out and filtered with a straight-hole membrane filter having hole openings of nominal opening size of 3 µm and the weight of the inert particles used for filtration, based on the average particle diameter and density of the particles (the average particle diameter is obtained from an area circle equivalent diameter, and the number of the particles as completely spherical particles is calculated from the obtained average particle diameter).

In the above polyester composition of the present invention, the average particle diameter of the spherical fine particles is preferably in the range of 0.7 to 1.5 µ m. when the average particle diameter of the spherical fine particles is 0.2 µm or more and less than 0.7 m, only a maximum of 100 spherical particles having a particle diameter more than 2 µm are preferably contained based on one million particles out of all the fine particles. When the average particle diameter of the spherical fine particles is less than 0.2 µm, only a maximum of 500 spherical particles having a particle diameter more than 0.2 µm are contained based on one million particles out of all the fine particles.

when the polyester composition of the present invention is formed into a film, conventionally known methods can be used. For example, a film can be produced by melt-extruding and quenching a polyester to give an unstretched film, stretching the unstretched film in biaxial directions, heat-set, and subjected to thermal-relaxing treatment as required. Since the physical properties such as surface properties, density and heat shrinkage of the film change according to stretching conditions and other production conditions, the methods are suitably selected according to requirements. This film may be a single-layer film or a biaxially oriented laminate film having a layer containing the polyester composition of the present invention on at least one side thereof. These films can be the most preferably used as a base film for a magnetic recording medium by making use of the feature of the present invention that the number of the spherical coarse particles is extremely small.

To produce such a film, for example, the above unstretched film is stretched to 2.5 times or more, preferably 3 times or more, in a monoaxial direction (longitudinal direction or transverse direction) at a temperature of (Tg - 10) to (Tg + 60)°C (Tg: glass transition temperature of the polyester) and then to 2.5 times or more, preferably 3 times or more, in a direction perpendicular to the above direction at a temperature of Tg to (Tg + 70)°C. Further, it may be stretched again in the longitudinal direction or in the transverse direction as required. The total stretch ratio is preferably 9 times or more, more preferably 12 to 35 times, particularly preferably 15 to 30 times, in terms of area stretch ratio. Further, the biaxially oriented film can be heat-set at a temperature of (Tg + 70) to (Tm - 10)°C (Tm: melting point of polyester), for example, 180 to 250°C. The heat-setting time is preferably 1 to 60 sec.

The biaxially oriented polyester film of the present invention produced as above preferably shows 15 or less

interference fringes of the third or higher order per 15 $cm^2$ at a measurement light wavelength of 0.54 µm.

The above biaxially oriented polyester film is preferably obtained from the polyester composition of the present invention which contains spherical fine particles having an average particle diameter of 0.7 to 1.5 µm.

The biaxially oriented polyester film of the present invention is obtained from the polyester composition of the present invention which contains spherical fine particles having an average particle diameter more than or equal to 0.2 µm and less than 0.7 µm as a film which shows 15 or less interference fringes of the second or higher order per 15 $cm^2$ at a measurement light wavelength of 0.54 µm.

Similarly, the biaxially oriented film of the present invention is obtained from the polyester composition of the present invention which contains spherical fine particles having an average particle diameter less than 0.2 µm as a film which has 10 or less protrusions having a maximum diameter of 1 µm or more per 0.25 $cm^2$ when visually counted through a differential interference microscope.

The following examples are given to further illustrate the present invention. Physical properties and characteristic properties in the present invention were measured and defined as follows.

(1) Average particle diameter of particles

A particle diameter equivalent to 50 mass percent is read from a cumulative curve of each particle diameter, calculated based on the centrifugal sedimentation curve obtained using the CP-50 Centrifugal Particle Size Analyzer of Shimadzu Corporation and an aqueous solution containing a trace amount of a surfactant as a dispersion medium, and the amount of particles having each particle diameter and is taken as the average particle diameter (refer to "Particle Size Measurement Technology" issued by Nikkan Kogyo Press, pp. 242-247, 1975).

(2) Relative standard deviation of particle diameter

A differential particle size distribution is obtained from the cumulative curve of the above paragraph (1), and the relative standard deviation is calculated based on the following definition expression of relative standard deviation.

$$\text{relative standard deviation} = \sqrt{\sum_{i=1}^{n} (Di-\bar{D})^2 / n} \Big/ \bar{D}$$

wherein Di is an area circle equivalent diameter of each particle (µm), $\bar{D}$ is a mean value of area circle equivalent diameter

$$\{=(\sum_{i=1}^{n} Di)/n\}\ (\mu m)$$

and n is the number of measured particles.

(3) Proportion of residue in slurry

About 0.1 to 1.0 g in terms of fine particles of the slurry is sampled and accurately weighed with a high-precision electronic balance. Thereafter, the slurry is diluted with and dispersed in about 300 ml of a dispersion medium (ethanol), and the resulting solution is subjected to natural filtration using a straight-hole membrane filter with hole openings of nominal opening size of 3 µm, manufactured by Nomura Science Co., Ltd., which has been weighed in advance. On the completion of filtration, the surface of the filter is washed with 1,000 to 3,000 ml of a dispersion medium and filtered. After filtration, the filter is dried and weighed to obtain the proportion of the residue from the following equation. The amount of the slurry sampled is changed to such an amount that can be easily filtered according to the proportion of the residue.

proportion of residual particles (wt%) = ((A-B)/C) × 100 wherein A is a weight of the filter after filtration, B is a weight of the filter before filtration, and C is a total weight of all fine particles used for filtration.

(4) Proportion of spherical residual particles in slurry

About 0.002 to 0.2 g in terms of fine particles of the slurry is sampled and accurately weighed with a high-precision electronic balance. Thereafter, the slurry is diluted with and dispersed in about 300 ml of a dispersion medium (ethanol), and the resulting solution is subjected to natural filtration with a straight-hole membrane filter having hole openings of nominal opening size of 3 μm, manufactured by Nomura Science Co., Ltd. On the completion of filtration, the surface of the filter is washed with 1,000 to 3,000 ml of a dispersion medium and filtered. After filtration, the filter is dried, subjected to gold sputtering and observed through a scanning electron microscope at a magnification of 500 to 5,000X to count only the spherical residual particles on the filter.

The proportion of spherical residual particles is obtained from the unit number of the fine particles calculated from the total amount of all the fine particles used for filtration mainly based on the average particle diameter and density of the particles according to the following equation.

In this specification, the number of the spherical residual particles on the filter is given based on one million calculated fine particles.

proportion of spherical residual particles = D/E wherein D is the count of spherical residual particles on the straight-hole membrane filter and E is a unit number calculated from the total amount of all the fine particles used for filtration.

(5) Evaluation of filtration of slurry

A slurry of 10 wt% particle density is filtered with a filter having an absolute filtration accuracy of 3 μm. Filtration conditions are such that 100 liter of the slurry is supplied at room temperature and filtered at a rate of 2.0 to 3.5 kg/$cm^2$ to judge clogging from variations in filter pressure. The state of clogging is evaluated as follows. The measurement is carried out three times.

◎: Filter pressure does not rise at all and filtration is good.
Δ : Filter pressure slightly rises and filtration is unsatisfactory.
× : Filter pressure sharply rises and filtration is impossible.

(6) Proportion of deformed particles in slurry particles

A small amount of the prepared slurry is sampled, diluted with a dispersion medium (ethanol), dropped onto a sample table and dried. Thereafter, at least 100 particles are observed through a scanning electron microscope at a magnification of 10,000 to 30,000X, and the number of deformed (cracked, crushed and fragmented) particles is obtained from the following equation. The measurement is carried out five times.

proportion (%) of deformed particles = (count value of deformed particles/count of all particles) × 100

(7) Number of coarse protrusions on film and evaluation of interior of coarse protrusion

The film is observed through a polarization microscope. Polarized portions having a maximum diameter of 5 to 8 μ m are regarded as coarse protrusions and the number of the protrusions per 100 $cm^2$ is measured and evaluated as follows. The measurement is carried out five times.

(criteria)

◎: 0 to 5 coarse protrusions
○ : 6 to 10 coarse protrusions
Δ : 11 to 20 coarse protrusions
× : more than 20 coarse protrusions

Next, the coarse protrusion sites of the film are marked and the polymer of the surface layer is removed with a plasma reactor to observe the nucleus of the coarse protrusion through an scanning electron microscope.

Example 1

(1) Preparation of slurry

(Pretreatment)

Cross-linked polystyrene particles (Pst an average particle diameter of 1.0 μm and a relative standard deviation of 0.35) were synthesized in a water medium by a seed emulsion polymerization. Thereafter, water was replaced by ethylene glycol using an evaporator to give 1,000 kg of an ethylene glycol dispersion (cross-linked polystyrene particle content = 10 wt%).

Then, the dispersion was wet-dispersed with a jetstream inductor mixer for 4 hours, and the obtained slurry was subjected to wet atomization treatment with a medium-stirring-type ultra-visco mill for 1 hour.

(Prefiltration)

Thereafter, the resulting slurry was filtered with a pleated filter of 10-μm openings and that of 5-μm openings once each to prepare a slurry.

(Absolute filtration)

This prepared slurry was filtered with a filter having an absolute filtration accuracy of 3 μm five times in succession.

(2) Production of polyester containing spherical cross-linked polystyrene particles

An ester interchange reaction was carried out between dimethyl terephthalate and ethylene glycol in the presence of manganese acetate as an ester interchange catalyst, antimony trioxide as a polymerization catalyst and phosphorus acid as a stabilizer in accordance with a commonly used method, and in the last stage of the ester interchange reaction, the slurry of cross-linked polystyrene particles prepared in (1) was added in an equivalent amount of 0.2 wt% in terms of the particles based on dimethyl terephthalate. Thereafter, the polymerization reaction was carried out to obtain polyethylene terephthalate (polyester composition) having an intrinsic viscosity (in orthochlorophenol, at 35°C) of 0.62.

(3) Formation of film of polyester composition

Pellets of the polyester obtained in (2) were dried at 170°C for 3 hours, supplied to the hopper of an extruder and molten at a temperature of 280 to 300°C. This molten polymer was extruded onto a rotary cooling drum having a surface temperature of 20°C through a 1-mm slit die and quenched to give an unstretched film. This unstretched film was preheated at 75°C, stretched to 3.6 times between low-speed and high-speed rolls while heated with a single IR heater having a surface temperature of 900°C from 15 mm above the rolls, and quenched. Subsequently, the stretched film was supplied to a stenter to be stretched to 3.7 times in a transverse direction at 105°C. The obtained biaxially oriented film was heat-set at 205°C for 5 seconds to give a heat-set biaxially oriented polyester film having a thickness of 15 μm. The characteristic properties of the obtained slurry and the characteristic properties of the film are shown in Table 1.

Example 2

A slurry and a film were obtained in the same manner as in Example 1 except that wet-atomization treatment with a medium-stirring-type ultra-visco mill was not carried out in the preparation of a slurry, prefiltration with a prefilter was carried out 10 times, and filtration with a filter having an absolute filtration accuracy of 3 μm was carried out only once. The characteristic properties of the obtained slurry and the film are shown in Table 1.

Example 3

(1) Preparation of slurry

A slurry was prepared in the same manner as in Example 1 except that water was used as a dispersion medium in place of ethylene glycol and wet atomization treatment was carried out for 2 hours.

(2) Production of polyester containing spherical cross-linked polystyrene particles

Undried polyethylene terephthalate pellets containing no additives were supplied from a vibration quantitative feeder at a rate of 5 to 15 kg/hr to a vented, unidirectional and meshing-type twin-screw kneading extruder having kneading disc paddles as a screw component, and the slurry in (1) above was added using a Milton quantitative pump so that the content of the particles in the polyester is 0.2 wt%. Adjusting the degree of vacuum at the vent port to about 1 mmHg at this point, the resulting mixture was molten and kneaded at a cylinder temperature of 285°C and extruded to give polyethylene terephthalate (polyester composition) having an intrinsic viscosity (in orthochlorophenol, at 35°C) of 0.57.

A film was formed from the polyester composition in the same manner as in Example 1. The characteristic properties of the obtained slurry and the characteristic properties of the film are shown in Table 1.

Example 4

A slurry and a film were obtained in the same manner as in Example 1 except for the procedure comprising synthesizing cross-linked polystyrene particles in a water dispersion by sheet emulsion polymerization, dry-dispersing and classifying the particles using a transport dissolving system to take them out as powder, preparing 1,000 kg of an ethylene glycol slurry (content of cross-linked polystyrene particles = 10 wt%) and subjecting the ethylene glycol slurry to a wet atomization treatment with a medium stirring ultra-visco mill for 4 hours. The characteristic properties of the obtained slurry and the characteristic properties of the film are shown in Table 1.

Example 5

A slurry and a film were obtained in the same manner as in Example 1 except that the cross-linked polystyrene particles were changed to those having an average particle diameter of 0.5 µm and a relative standard deviation of 0.10 and that the amount of the particles added was changed to 0.5 wt% in the production of a polyester. The characteristic properties of the obtained slurry and the characteristic properties of the film are shown in Table 1.

Example 6

A slurry and a film were obtained in the same manner as in Example 1 except that the cross-linked polystyrene particles were changed to spherical silicone rubber particles (having an average particle diameter of 1.2 µm and a relative standard deviation of 0.20) obtained by subjecting a reaction solution prepared by addition polymerization between vinyl group-containing methylpolysiloxane and methyl hydrogen polysiloxane to an underwater curing method and that the amount of the particles added was changed to 0.25 wt% in the production of a polyester. The characteristic properties of the obtained slurry and the characteristic properties of the film are shown in Table 1.

Example 7

A slurry and a film were obtained in the same manner as in Example 1 except that the cross-linked polystyrene particles were changed to spherical silicone resin particles (having an average particle diameter of 0.5 µm and a relative standard deviation of 0.12) and the amount of the particles added was changed to 0.50 wt% in the production of a polyester. The characteristic properties of the obtained slurry and the characteristic properties of the film are shown in Table 1.

Comparative Example 1

A slurry and a film were obtained in the same manner as in Example 1 except that prefiltration and filtration with a filter having an absolute filtration accuracy of 3 µm were not carried out in the preparation of a slurry. The characteristic properties of the obtained slurry and the characteristic properties of the film are shown in Table 1.

Comparative Example 2

A slurry and a film were obtained in the same manner as in Example 1 except that wet atomization was carried out for 14 hours and filtration with a filter having an absolute filtration accuracy of 3 µm was not carried out in the preparation of a slurry. The characteristic properties of the obtained slurry and the characteristic properties of the film are shown in Table 1.

Comparative Example 3

A slurry and a film were obtained in the same manner as in Example 5 except that filtration with a filter having an absolute filtration accuracy of 3 μm was not carried out in the preparation of a slurry. The characteristic properties of the obtained slurry and the characteristic properties of the film are shown in Table 1.

The films of Examples 1 to 5 had fewer coarse particles than the films of Comparative Examples 1 to 3 and great improvement was seen in Examples 1 to 5. when the nuclei of coarse protrusions on the films of Comparative Examples 1 to 3, which had a large number of coarse protrusions, were observed, the presence of spherical coarse particles was confirmed.

Table 1-1

| | item | unit | Ex.1 | Ex.2 | Ex.3 | Ex.4 | Ex.5 |
|---|---|---|---|---|---|---|---|
| pretreatment | organic polymer particles | | cross-linked Pst particles | cross-linked Pst particles | cross-linked Pst particles | cross-linked Pst particles | cross-linked Pst particles |
| | dry dispersion and classification | number of times | not carried out | not carried out | not carried out | once | not carried out |
| | wet dispersion | number of hours | 4hr | 4hr | 4hr | 4hr | 4hr |
| | wet milling | number of hours | 1hr | not carried out | 2hr | 4hr | 1hr |
| | prefiltration | number of times | once | 10 times | once | once | once |
| characteristic properties of pretreated slurry | average particle diameter | μm | 1.0 | 1.0 | 1.0 | 1.0 | 0.5 |
| | proportion of deformed particles | % | 2~5 | 1~2 | 4~7 | 10~15 | 2~5 |
| | proportion of residue | wt% | 0.03 | 0.04 | 0.01 | 0.04 | 0.03 |
| | filtration of slurry | | ◎ | ◎ | ◎ | ◎ | ◎ |

Pst: polystyrene

Ex.: Example

Table 1-1 (continued)

| | item | unit | Ex.1 | Ex.2 | Ex.3 | Ex.4 | Ex.5 |
|---|---|---|---|---|---|---|---|
| absolute filtration | absolute filtration | number of times | 5 times | once | 5 times | 5 times | 5 times |
| characteristic properties of slurry subjected to absolute filtration | proportion of residue | wt% | 0.003 | 0.007 | 0.002 | 0.002 | 0.003 |
| | number of spherical residual particles | per one million particles | 0.5 | 4.2 | 0.7 | 2.5 | 1.7 |
| | average particle diameter | μm | 1.0 | 1.0 | 1.0 | 1.0 | 0.5 |
| characteristic properties of film | amount of particles | wt% | 0.2 | 0.2 | 0.2 | 0.2 | 0.5 |
| | number of coarse protrusions | per 100 $cm^2$ | ◎ | ◎~○ | ◎ | ◎ | ◎ |
| | observation of nucleus of coarse protrusion (coarse particles/agglomerates) | spherical coarse particles: % | not analyzed | not analyzed | not analyzed | not analyzed | not analyzed |
| | | agglomerates: % | not analyzed | not analyzed | not analyzed | not analyzed | not analyzed |

Ex.: Example

Table 1-2

| | item | unit | Ex.6 | Ex.7 | C.Ex.1 | C.Ex.2 | C.Ex.3 |
|---|---|---|---|---|---|---|---|
| pretreatment | organic polymer particles | | silicone rubber particles | silicone resin particles | cross-linked Pst particles | cross-linked Pst particles | cross-linked Pst particles |
| | dry-dispersion-and-classification treatment | number of times | not carried out | not carried out | not carried out | not carried out | not carried out |
| | wet dispersion | number of hours | 4hr | 4hr | 4hr | 4hr | 4hr |
| | wet milling | number of hours | 1hr | 1hr | 1hr | 14hr | 1hr |
| | prefiltration | number of times | once | once | not carried out | once | once |
| characteristic properties of pretreated slurry | average particle diameter | μm | 1.2 | 0.5 | 1.0 | 1.0 | 0.5 |
| | proportion of deformed particles | % | 2~5 | 2~5 | 2~5 | 14~20 | 2~5 |
| | proportion of residue | wt% | 0.03 | 0.04 | 0.23 | 0.04 | 0.03 |
| | filtration of slurry | | ◎ | ◎ | × | ◎ | ◎ |

Ex.: Example

C.Ex.: Comparative Example

Table 1-2 (continued)

| | item | unit | Ex.6 | Ex.7 | C.Ex.1 | C.Ex.2 | C.Ex.3 |
|---|---|---|---|---|---|---|---|
| absolute filtration | absolute filtration | number of times | 5 times | 5 times | not carried out | not carried out | not carried out |
| characteristic properties of slurry subjected to absolute filtration | proportion of residue | wt% | 0.007 | 0.005 | 0.22 | 0.04 | 0.03 |
| | number of spherical residual particles | per one million particles | 3.5 | 1.2 | 250 | 190 | 180 |
| | average particle diameter | μm | 1.2 | 0.5 | 1.0 | 1.0 | 0.5 |
| characteristic properties of film | amount of particles | wt% | 0.25 | 0.5 | 0.2 | 0.2 | 0.5 |
| | number of coarse protrusions | per 100 $cm^2$ | ◎ | ◎ | × | × | × |
| | observation of nucleus of coarse protrusion (coarse particles/agglomerates) | spherical coarse particles: % | not analyzed | not analyzed | 50 | 90 | 92 |
| | | agglomerates: % | not analyzed | not analyzed | 40 | 5 | 4 |

Ex.: Example

C.Ex.: Comparative Example

Physical properties and characteristic properties in the following examples and comparative examples were measured and defined as follows.

(1) Average particle diameter of particles

(a) in the case of powder

A particle diameter equivalent to 50 mass percent is read from a cumulative curve of each particle diameter, calculated based on the centrifugal sedimentation curve obtained using the CP-50 Centrifugal Particle Size Analyzer of Shimadzu Corporation and an aqueous solution containing a trace amount of a surfactant as a dispersion medium, and the amount of particles having each particle diameter and is taken as the average particle diameter (refer to "Particle Size Measurement Technology" issued by Nikkan Kogyo Press, pp. 242-247, 1975).

(b) in the case of particles contained in film

A small piece of a sample film is fixed on the sample table of a scanning electron microscope, and the surface of the film is ion-etched under the following conditions using a sputtering device (JFC-1100 model ion etching device) of JEOL Ltd. The conditions are such that the sample is placed in a bell jar and pressure is reduced to about 10-3 Torr to carry out ion etching at a voltage of 0.25 kV and a current of 12.5 mA for about 10 minutes. Further, the surface of the film is subjected to gold sputtering with the same device and observed through a scanning electron microscope at a magnification of 10,000 to 30,000X, and the long diameters, short diameters and area circle equivalent diameters of at least 100 particles are obtained with the Luzex 500 of Nippon Regulator co., Ltd. The average particle diameter is calculated from these values.

(2) Proportion of residue in slurry

About 0.1 to 1.0 g in terms of fine particles of the slurry is sampled and accurately weighed with a high-precision electronic balance. Thereafter, the slurry is diluted with and dispersed in about 300 ml of a dispersion medium (ethanol) and is subjected to natural filtration with a straight-hole membrane filter having hole openings of nominal opening size of 3 µm, manufactured by Nomura Science Co., Ltd., which has been weighed in advance. On the completion of filtration, the surface of the filter is washed with 1,000 to 3,000 ml of a dispersion medium and filtered. After filtration, the filter is dried and weighed to obtain the amount of the residue from the following equation. (The amount of the slurry sampled is suitably changed to such an amount that can be easily filtered according to the proportion of the residue.)

If necessary, the slurry is filtered with straight-hole membrane filters having openings of nominal opening size of 2 µm and/or 0.6 µm in the same manner as described above to obtain the amount of the residue. Filtration with a straight-hole membrane filter having hole openings of nominal opening size of 0.6 µm may be combined with low or reduced pressure filtration, as the case may be.

proportion of residue (wt%) = ((A-B)/C) × 100 wherein A is the weight of the filter after filtration, B is the weight of the filter before filtration, and C is the total weight of all the fine particles used for filtration.

(3) Proportion of spherical residual particles in slurry

About 0.002 to 0.2 g, in terms of fine particles, of the slurry is sampled and accurately weighed with a high-precision electronic balance. Thereafter, the slurry is diluted with and dispersed in about 300 ml of a dispersion medium (ethanol), and the resulting mixture is subjected to natural filtration with a straight-hole membrane filter having hole openings of nominal opening size of 3 µm manufactured by Nomura Science Co., Ltd. At the completion of filtration, the surface of the filter is washed with 1,000 to 3,000 ml of a dispersion medium and filtered. After filtration, the filter is dried, subjected to gold sputtering and observed through a scanning electron microscope at a magnification of 500 to 10,000X to count only the spherical residual particles on the filter.

The proportion of the spherical residual particles is obtained from the unit number of the spherical particles calculated from the total amount of all the fine particles used for filtration, mainly based on the average particle diameter and density of the particles, according to the following equation.

If necessary, the slurry is filtered with straight-hole membrane filters having hole openings of nominal opening size of 2 µm and/or 0.6 µm in the same manner as described above to obtain the proportion of the spherical residual particles. Filtration with a straight-hole membrane filter having hole openings of nominal opening size of 0.6 µm may be combined with low or reduced pressure filtration, as the case may be.

In this specification, the number of the spherical residual particles on the filter is given based on one million

particles out of the calculated fine particles.

proportion of spherical residual particles = D/E wherein D is a count of spherical residual particles on the straight-hole membrane filter and E is a unit number calculated from the total amount of all the fine particles used for filtration.

(4) Proportion of spherical residual particles in polymer

(A) polymer-depolymerization method

An appropriate amount of a polymer containing spherical fine particles is sampled and depolymerized by adding excess ethylene glycol (triethylene glycol or tetraethylene glycol in the case where a polymer component remains). Thereafter, the particles are extracted by centrifugation or filtration and fully washed with ethanol.

Then, the extracted particles are diluted with and dispersed in ethanol, and the resulting mixture is filtered with a straight-hole membrane filter having hole openings of nominal opening size of 3 μm. At the completion of filtration, the surface of the filter is washed with ethanol and filtered. After filtration, the filter is dried, subjected to gold sputtering and observed through a scanning electron microscope at a magnification of 500 to 10,000X to count the number of only the spherical particles on the filter. The proportion of the spherical residual particles is obtained from the number of the spherical particles calculated from the weight of all the fine particles used for filtration based on the average particle diameter and density of the fine particles according to the following equation.

If necessary, the particles are filtered with straight-hole membrane filters having hole openings of nominal opening size of 2 μm and/or 0.6 μm in the same manner as described above to obtain the proportion of the spherical residual particles. Filtration with a straight-hole membrane filter having hole openings of nominal opening size of 0.6 μm may be combined with low or reduced pressure filtration, as the case may be.

proportion of spherical residual particles = the number of spherical residual particles on filter/total number of all the fine particles used for filtration

(B) polymer-melting method

An appropriate amount of a polymer containing spherical fine particles is sampled, and while an excessive E-sol solution (1,1,2,2-tetrachloroethane: phenol = 40:60 wt%) is added and the resulting mixture is stirred, the temperature is raised to and maintained at 120 to 140°C for about 3 to 5 hours to melt the polyester. when a crystallized portion of the polyester is not molten, however, the heated E-sol solution is quenched once and molten again in the same manner as described above.

The particles are extracted by centrifugation or filtration. After a polymer component remaining in the particles is removed with the E-sol solution, the particles are diluted with and dispersed in an organic solvent and the resulting solution is filtered with a straight-hole membrane filter having hole openings of nominal opening size of 3 μ m. At the completion of filtration, the surface of the filter is further washed with an organic solvent and filtered. After filtration, the filter is dried, subjected to gold sputtering and observed through a scanning electron microscope at a magnification of 500 to 10,000X to count the number of only the spherical particles on the filter. The proportion of the spherical residual particles is obtained in the same manner as in (A) above.

If necessary, the particles are filtered with straight-hole membrane filters having hole openings of nominal opening size of 2 μm and/or 0.6 μm in the same manner as described above to obtain the proportion of the spherical residual particles. Filtration with a straight-hole membrane filter having hole openings of nominal opening size of 0.6 μm may be combined with low or reduced pressure filtration, as the case may be.

(5) Particle diameter and particle diameter ratio of spherical fine particle and residual spherical particle

Particle diameter of residual spherical particle is calculated from area equivalent diameter obtained with Luzex 500 of Nippon Regulator Co., Ltd. Spherical fine particles and spherical residual particles are observed through a scanning electron microscope at a magnification of 500 to 50,000X, and the particle diameter ratio is expressed as the ratio of the maximum diameter to the minimum diameter.

(6) Evaluation of number of coarse protrusions on film

(A) in the case where average particle diameter of spherical fine particles is 0.7 μm or more and less than 1.5 μm

Aluminum is deposited on the surface of a film, and the resulting surface is observed through a two-beam interferometer to count the number of protrusions showing the n-th order interference fringes at a measurement wave-

length of 0.54 μm. The measurement area is 15 $cm^2$, and the protrusions showing the third or higher order interference fringes are evaluated.

[criteria]

◎: 0 to 5 coarse protrusions
○ : 6 to 15 coarse protrusions
Δ : 16 to 40 coarse protrusions
× : 41 or more coarse protrusions

(B) in the case where average particle diameter of spherical fine particles is 0.2 μm or more and less than 0.7 μm

Aluminum is deposited on the surface of a film, and the resulting surface is observed through a two-beam interferometer to count the number of protrusions showing the n-th order interference fringes at a measurement wavelength of 0.54 μm. The measurement area is 15 $cm^2$, and the protrusions showing the second or higher order interference fringes are evaluated.

[criteria]

◎: 0 to 5 coarse protrusions
○ : 5 to 15 coarse protrusions
Δ : 15 to 40 coarse protrusions
× : 40 or more coarse protrusions

(C) in the case where average particle diameter of spherical fine particles is less than 0.2 μm

Aluminum is deposited on the surface of a film, and the resulting surface is observed through a differential interference microscope to count the number of protrusions having a maximum diameter of 1 μm or more. The measurement area is 0.25 $cm^2$.

[criteria]

◎: 0 to 3 coarse protrusions
○ : 3 to 10 coarse protrusions
Δ : 10 to 20 coarse protrusions
× : 20 or more coarse protrusions

<u>Example 8</u>

(1) Preparation of slurry of spherical silicone resin particles (Pretreatment)

About 360 kg of ethylene glycol was added to about 40 kg of silicone resin particles (having an average particle diameter of 0.9 μm and a relative standard deviation of 0.25), which had been synthesized in an aqueous solution from methyl trialkoxy silane using sodium dodecylbenzenesulfoate as an emulsifier, and the resulting mixture was wet-dispersed with a jetstream inductor mixer for 2 hours. Thereafter, the obtained slurry was subjected to wet-atomization treatment with a medium-stirring-type ultra-visco mill for 2 hours.

(Prefiltration)

Thereafter, the slurry was prefiltered once with a pleated filter of 5-μm openings.

(Absolute filtration)

This slurry was filtered with a filter having an absolute filtration accuracy of 3 μm 5 times in succession. The residue and spherical residual particles of the slurry were measured.

(2) Production of master polymer containing spherical silicone resin particles

An ester interchange reaction was carried out between dimethyl terephthalate and ethylene glycol in the presence of manganese acetate as an ester interchange catalyst, antimony trioxide as a polymerization catalyst and phosphorous acid as a stabilizer in accordance with a commonly used method, and in the last stage of the ester interchange reaction, the slurry of spherical silicone resin particles prepared in (1) was added in an equivalent amount of 0.6 wt% in terms of the particles based on dimethyl terephthalate. Thereafter, the polymerization reaction was carried out to obtain polyethylene terephthalate having an intrinsic viscosity (in orthochlorophenol, at 35°C) of 0.62.

(3) Formation of polyester film

Master pellets of polyethylene terephthalate containing the particles of other lubricants of different types and pellets of polyethylene terephthalate containing no lubricant were produced, separately from the pellets of the polyester obtained in (2), in accordance with a commonly used method. The master pellets, the pellets obtained in (2) and/or the pellets containing no lubricant were mixed together in a ratio shown in Table 2. The resulting mixture was dried at 170°C for 3 hours, supplied to the hopper of an extruder and molten at a temperature of 280 to 300°C. This molten polymer was extruded onto a rotary cooling drum having a surface temperature of 20°C through a 1-mm slit die and quenched to give an unstretched film. This unstretched film was preheated at 75°C, stretched to 3.6 times between low-speed and high-speed rolls while heated with a single IR heater having a surface temperature of 900°C from 15 mm above the rolls, and quenched. Subsequently, the stretched film was supplied to a stenter to be stretched to 3.7 times in a transverse direction at 105°C. The obtained biaxially oriented film was heat-set at 205°C for 5 seconds to give a heat-set biaxially oriented polyester film having a thickness of 15 μm. The characteristic properties of the obtained polymer and the characteristic properties of the film are shown in Table 2.

Example 9

A film was obtained in the same manner as in Example 8 except that filtration with a filter having an absolute filtration accuracy of 3 μm was carried out only once in the preparation of a slurry. The characteristic properties of the obtained polymer and the characteristic properties of the film are shown in Table 2.

Example 10

A film was obtained in the same manner as in Example 8 except that the steps (2) and (3) were carried out using methyl-2,6-naphthalene dicarboxylate in place of dimethyl terephthalate, the surface temperature of the rotary cooling drum was changed to 60°C, the preheating temperature at the time of stretching in a longitudinal direction was changed to 120°C, the surface temperature of the IR heater was changed to 950°C, the temperature at the time of stretching in a transverse direction was changed to 125°C and the heat setting temperature and time were changed to 215°C and 10 seconds. The characteristic properties of the obtained polymer and the characteristic properties of the film are shown in Table 2.

Example 11

A film was obtained in the same manner as in Example 8 except that 0.2 wt% of alumina (of a θ-type crystal form) having an average particle diameter of 0.2 μm was contained in the film formation (3). The characteristic properties of the obtained polymer and the characteristic properties of the film are shown in Table 2. A slurry was prepared and a master polymer was produced in the same manner as in the steps (1) and (2), respectively, and the alumina was blended with the polymer at the time of film formation.

Example 12

A film was obtained in the same manner as in Example 8 except that 0.3 wt% of calcium carbonate particles having an average particle diameter of 0.5 μm was contained in the film formation (3). The characteristic properties of the obtained polymer and the characteristic properties of the film are shown in Table 2. A slurry was prepared and a

master polymer was produced in the same manner as in the steps (1) and (2), respectively, and the calcium carbonate was blended with the polymer at the time of film formation.

Example 13

A film was obtained in the same manner as in Example 8 except that the spherical particles were changed to cross-linked polystyrene particles (having an average particle diameter of 1.2 µm and a relative standard deviation of 0.4) and the concentration of the slurry was changed to about 5 wt%. The characteristic properties of the obtained polymer and the characteristic properties of the film are shown in Table 2.

Example 14

A film was obtained in the same manner as in Example 8 except that the spherical particles were changed to silica particles (having an average particle diameter of 1.2 µm and a relative standard deviation of 0.15) and the slurry was not treated with a medium-stirring-type ultra-visco mill. The characteristic properties of the obtained polymer and the characteristic properties of the film are shown in Table 2.

Comparative Example 4

A film was obtained in the same manner as in Example 8 except that filtration with a filter having an absolute filtration accuracy of 3 µm was not carried out in the preparation of a slurry. The characteristic properties of the obtained polymer and the characteristic properties of the film are shown in Table 2. The particle diameter ratio of the spherical coarse particle was 1.05.

Comparative Example 5

A film was obtained in the same manner as in Example 8 except that prefiltration with a pleated filter of 5-µ m openings and filtration with a filter having an absolute filtration accuracy of 3 µm were not carried out in the preparation of a slurry. The characteristic properties of the obtained polymer and the characteristic properties of the film are shown in Table 2. The particle diameter ratio of the spherical coarse particle was 1.05.

Comparative Example 6

A film was obtained in the same manner as in Example 13 except that prefiltration with a pleated filter of 5-µm openings and filtration with a filter having an absolute filtration accuracy of 3 µm were not carried out in the preparation of a slurry. The characteristic properties of the obtained polymer and the characteristic properties of the film are shown in Table 2. The particle diameter ratio of the spherical coarse particle was 1.10.

Comparative Example 7

A film was obtained in the same manner as in Example 14 except that prefiltration with a pleated filter of 5-µm openings and filtration with a filter having an absolute filtration accuracy of 3 µm were not carried out in the preparation of a slurry. The characteristic properties of the obtained polymer and the characteristic properties of the film are shown in Table 2. The particle diameter ratio of the spherical coarse particle was 1.02.

Table 2-1

| | | Ex.8 | Ex.9 | Ex.10 *1 | Ex.11 *2 | Ex.12 *3 | Ex.13 | Ex.14 |
|---|---|---|---|---|---|---|---|---|
| spherical particles | type | silicone resin particles | silicone resin particles | silicone resin particles | silicone resin particles | silicone resin particles | cross-linked polystyrene particle | silica particle |
| | average particle diameter (μm) | 0.9 | 0.9 | 0.9 | 0.9 | 0.9 | 1.2 | 1.2 |
| slurry | proportion of residue (wt%) | ≦0.002 | 0.006 | ≦0.002 | ≦0.002 | ≦0.002 | 0.006 | 0.005 |
| | proportion of spherical residual particles *4 | $4.0/10^7$ | $4.5/10^6$ | $4.0/10^7$ | $4.0/10^7$ | $4.0/10^7$ | $7.7/10^7$ | $9.2/10^7$ |
| polymer | content in film (wt%) | 0.02 | 0.02 | 0.2 | 0.02 | 0.02 | 0.01 | 0.05 |
| | proportion of spherical residual particles *4 | $3.2/10^7$ | $4.3/10^6$ | $3.5/10^7$ | $3.5/10^7$ | $3.7/10^7$ | $8.4/10^7$ | $9.8/10^7$ |
| other lubricant | type | | | | alumina | calcium carbonate | | |
| | particle diameter(μm) | | | | 0.2 | 0.5 | | |
| | content in film (wt%) | | | | 0.2 | 0.3 | | |
| Film | evaluation of coarse protrusions *5 | ◎ | ○ | ◎ | ◎ | ◎ | ◎ | ◎ |

Ex.: Example

Table 2-2

| | | C.Ex.4 | C.Ex.5 | C.Ex.6 | C.Ex.7 |
|---|---|---|---|---|---|
| spherical particles | type | silicone resin particles | silicone resin particles | cross-linked polystyrene particle | silica particle |
| | average particle diameter (μm) | 0.9 | 0.9 | 1.2 | 1.2 |
| slurry | proportion of residue (wt%) | 0.009 | 0.04 | 0.09 | 0.03 |
| | proportion of residual spherical particles *4 | $19.0/10^6$ | $51.2/10^6$ | $145.5/10^6$ | $83.0/10^6$ |
| polymer | content in film (wt%) | 0.02 | 0.02 | 0.01 | 0.05 |
| | proportion of spherical residual particles *4 | $18.2/10^6$ | $50.5/10^6$ | $135.8/10^6$ | $83.3/10^6$ |
| other lubricant | type | - | - | - | - |
| | particle diameter (μm) | - | - | - | - |
| | content in film (wt%) | - | - | - | - |
| Film | evaluation of coarse protrusions *5 | × | × | × | × |

*1 Evaluated with polyethylene-2,6-naphthalate in place of polyethylene terephthalate.

*2 0.2 wt% of alumina having an average particle diameter of 0.2 μm was contained in the film formation.

*3 0.3 wt% of calcium carbonate having an average particle diameter of 0.5 μm was contained in the film formation.

*4 A straight-hole membrane filter having hole openings of nominal opening size of 3 μm (hole density $2x10^6$ pores/$cm^2$) was used.

*5 Protrusions showing the third-order interference fringes were evaluated at a measurement wavelength of 0.54 μm.

As shown in Tables 2-1 and 2-2, a film made from a polyester composition in which the proportion of spherical coarse particles contained in the polymer is reduced to a specific value or less has extremely few coarse protrusions and is particularly useful as a base film for a magnetic recording medium.

Example 15

(1) Preparation of slurry of spherical silicone resin particles

(Pretreatment)

About 180 kg of ethylene glycol was added to about 20 kg of silicone resin particles (having an average particle diameter of 0.5 μm and a relative standard deviation of 0.22), which had been synthesized in an aqueous solution from methyl trialkoxy silane using sodium dodecylbenzenesulfonate as an emulsifier, and the resulting mixture was wet-dispersed with a jetstream inductor mixer for 2 hours. Thereafter, the obtained slurry was subjected to wet-atomization treatment with a medium-stirring-type ultra-visco mill for 2 hours.

(Prefiltration)

Thereafter, the slurry was prefiltered once with a pleated filter of 3-μm openings once.

(Absolute filtration)

This slurry was filtered with a filter having an absolute filtration accuracy of 2 μm 10 times in succession. The residue and spherical residual particles of the slurry were measured.

(2) Production of master polymer containing spherical silicone resin particles

An ester interchange reaction was carried out between dimethyl terephthalate and ethylene glycol in the presence of manganese acetate as an ester interchange catalyst, antimony trioxide as a polymerization catalyst and phosphorous acid as a stabilizer in accordance with a commonly used method, and in the last stage of the ester interchange reaction, the slurry of spherical silicone resin particles prepared in (1) was added in an equivalent amount of 0.4 wt% in terms of the particles based on dimethyl terephthalate. Thereafter, the polymerization reaction was carried out to obtain polyethylene terephthalate having an intrinsic viscosity (in orthochlorophenol, at 35°C) of 0.62.

(3) Formation of polyester film

Master pellets of polyethylene terephthalate containing the particles of other lubricants of different types and pellets of polyethylene terephthalate containing no lubricant were produced, separately from the pellets of the polyester obtained in (2), in accordance with a commonly used method. The master pellets, the pellets obtained in (2) and/or the pellets containing no lubricant were mixed together in a ratio shown in Table 3. The resulting mixture was dried at 170°C for 3 hours, supplied to the hopper of an extruder and molten at a temperature of 280 to 300°C. This molten polymer was extruded onto a rotary cooling drum having a surface temperature of 20°C through a 1-mm slit die and quenched to give an unstretched film. This unstretched film was preheated at 75°C, stretched to 3.6 times between low-speed and high-speed rolls while heated with a single IR heater having a surface temperature of 900°C from 15 mm above the rolls, and quenched. Subsequently, the stretched film was supplied to a stenter to be stretched to 3.7 times in a transverse direction at 105°C. The obtained biaxially oriented film was heat-set at 205°C for 5 seconds to give a heat-set biaxially oriented polyester film having a thickness of 15 μm. The characteristic properties of the slurry polymer obtained in the steps of (1), (2) and (3) and the characteristic properties of the film are shown in Table 3.

Example 16

A film was obtained in the same manner as in Example 15 except that filtration with a filter having an absolute filtration accuracy of 2 μm was carried out only once in the preparation of a slurry. The characteristic properties of the obtained slurry polymer and the characteristic properties of the film are shown in Table 3.

Example 17

A film was obtained in the same manner as in Example 15 except that the steps (2) and (3) were carried out

using methyl-2,6-naphthalene dicarboxylate in place of dimethyl terephthalate, the surface temperature of the rotary cooling drum was changed to 60°C, the preheating temperature at the time of stretching in a longitudinal direction was changed to 120°C, the surface temperature of the IR heater was changed to 950°C, the temperature at the time of stretching in a transverse direction was changed to 125°C and the heat setting temperature and time were changed to 215°C and 10 seconds. The characteristic properties of the obtained polymer and the characteristic properties of the film are shown in Table 3.

Example 18

A film was obtained in the same manner as in Example 15 except that 0.3 wt% of alumina (of a θ-type crystal form) having an average particle diameter of 0.18 µm was contained in the film formation (3). The characteristic properties of the obtained polymer and the characteristic properties of the film are shown in Table 3. A slurry was prepared and a master polymer was produced in the same manner as in the steps (1) and (2), respectively, and the alumina was blended with the polymer at the time of film formation.

Example 19

A film was obtained in the same manner as in Example 15 except that 0.2 wt% of amorphous silica particles having an average particle diameter of 0.12 µm was contained in the film formation (3). The characteristic properties of the obtained polymer and the characteristic properties of the film are shown in Table 3. A slurry was prepared and a master polymer was produced in the same manner as in the steps (1) and (2), respectively, and the silica particles were blended with the polymer at the time of film formation.

Example 20

A film was obtained in the same manner as in Example 15 except that the spherical particles were changed to cross-linked polystyrene particles (having an average particle diameter of 0.37 µm and a relative standard deviation of 0.5) and the concentration of a slurry was changed to about 5 wt% in the preparation of the slurry. The characteristic properties of the obtained polymer and the characteristic properties of the film are shown in Table 3.

Example 21

A film was obtained in the same manner as in Example 15 except that the spherical particles were changed to silica particles (having an average particle diameter of 0.3 µm and a relative standard deviation of 0.15) and the slurry was not treated with a medium-stirring-type ultra-visco mill. The characteristic properties of the obtained polymer and the characteristic properties of the film are shown in Table 3.

Comparative Example 8

A film was obtained in the same manner as in Example 15 except that filtration with a filter having an absolute filtration accuracy of 2 µm was not carried out in the preparation of a slurry. The characteristic properties of the obtained polymer and the characteristic properties of the film are shown in Table 3. The particle diameter ratio of the spherical coarse particle was 1.10.

Comparative Example 9

A film was obtained in the same manner as in Example 15 except that prefiltration with a pleated filter of 3-µm openings and filtration with a filter having an absolute filtration accuracy of 2 µm were not carried out in the preparation of a slurry. The characteristic properties of the obtained polymer and the characteristic properties of the film are shown in Table 3. The particle diameter ratio of the spherical coarse particle was 1.10.

Comparative Example 10

A film was obtained in the same manner as in Example 20 except that prefiltration with a pleated filter of 3-µm openings and filtration with a filter having an absolute filtration accuracy of 2 µm were not carried out in the preparation of a slurry. The characteristic properties of the obtained polymer and the characteristic properties of the film are shown in Table 3. The particle diameter ratio of the spherical coarse particle was 1.16.

Comparative Example 11

A film was obtained in the same manner as in Example 21 except that prefiltration with a pleated filter of 3-µm openings and filtration with a filter having an absolute filtration accuracy of 2 µm were not carried out in the preparation of a slurry. The characteristic properties of the obtained polymer and the characteristic properties of the film are shown in Table 3. The particle diameter ratio of the spherical coarse particle was 1.02.

Table 3-1

| | | Ex.15 | Ex.16 | Ex.17 *1 | Ex.18 *2 | Ex.19 *3 | Ex.20 | Ex.21 |
|---|---|---|---|---|---|---|---|---|
| spherical particles | type | silicone resin particle | silicone resin particle | silicone resin particle | silicone resin particle | silicone resin particle | cross-linked polystyrene particle | silica particle |
| | average particle diameter (μm) | 0.5 | 0.5 | 0.5 | 0.5 | 0.5 | 0.37 | 0.3 |
| slurry | proportion of residue (wt%) *4 | ≦0.002 | ≦0.002 | ≦0.002 | ≦0.002 | ≦0.002 | ≦0.002 | ≦0.002 |
| | proportion of residue (wt%) *5 | ≦0.002 | 0.003 | ≦0.002 | ≦0.002 | ≦0.002 | ≦0.002 | ≦0.002 |
| | proportion of spherical residual particles *4 | $1.1/10^7$ | $3.0/10^7$ | $1.1/10^7$ | $1.1/10^7$ | $1.1/10^7$ | $0.8/10^7$ | $1.5/10^7$ |
| | proportion of spherical residual particles *5 | $4.0/10^6$ | $90.2/10^6$ | $4.0/10^6$ | $4.0/10^6$ | $4.0/10^6$ | $31.0/10^6$ | $9.7/10^6$ |
| polymer | content in film (wt%) | 0.015 | 0.015 | 0.3 | 0.015 | 0.015 | 0.01 | 0.05 |
| | proportion of spherical residual particles *5 | $3.3/10^6$ | $88.5/10^6$ | $4.9/10^6$ | $7.0/10^6$ | $5.1/10^6$ | $26.7/10^6$ | $10.8/10^6$ |
| | proportion of spherical residual particles *4 | $0.9/10^7$ | $2.5/10^7$ | $0.8/10^7$ | $1.0/10^7$ | $1.0/10^7$ | $1.1/10^7$ | $1.8/10^7$ |

Ex.: Example

Table 3-1 (continued)

| | | Ex.15 | Ex.16 | Ex.17 *1 | Ex.18 *2 | Ex.19 *3 | Ex.20 | Ex.21 |
|---|---|---|---|---|---|---|---|---|
| other lubricant | type | | | | alumina | silica | | |
| | particle diameter ($\mu$m) | | | | 0.18 | 0.12 | | |
| | content in film (wt%) | | | | 0.3 | 0.2 | | |
| film | evaluation of coarse protrusions *6 | ◎ | ○ | ◎ | ◎ | ◎ | ◎ | ◎ |

Ex.: Example

*1 Evaluated with polyethylene-2,6-naphthalate in place of polyethylene terephthalate.

*2 0.3 wt% of alumina having an average particle diameter of 0.18 $\mu$m was contained in the film formation.

*3 0.2 wt% of silica having an average particle diameter of 0.5 $\mu$m was contained in the film formation.

*4 A straight-hole membrane filter having hole openings of normal opening size of 3 $\mu$m ($2x10^6$ pores/$cm^2$) was used

*5 A straight-hole membrane filter having hole openings of normal opening size of 2 $\mu$m ($2x10^6$ pores/$cm^2$) was used.

*6 Protrusions showing second-order interference fringes were evaluated at a measurement wavelength of 0.54 $\mu$m.

Table 3-2

| | | C.Ex.8 | C.Ex.9 | C.Ex.10 | C.Ex.11 |
|---|---|---|---|---|---|
| spherical particles | type | silicone resin particle | silicone resin particle | cross-linked polystyrene particle | silica particle |
| | average particle diameter (μm) | 0.5 | 0.5 | 0.37 | 0.3 |
| slurry | proportion of residue (wt%) *4 | 0.007 | 0.02 | 0.02 | 0.02 |
| | proportion of residue (wt%) *5 | 0.01 | 0.04 | 0.05 | 0.04 |
| | proportion of residual spherical particles *4 | $15.2/10^6$ | $77.7/10^6$ | $210.0/10^6$ | $68.8/10^6$ |
| | proportion of residual spherical particles *5 | $151.3/10^6$ | $697.0/10^6$ | $1012.2/10^6$ | $581.4/10^6$ |
| polymer | content in film (wt%) | 0.015 | 0.015 | 0.01 | 0.05 |
| | proportion of residual spherical particles *5 | $173.1/10^6$ | $658.5/10^6$ | $1039.5/10^6$ | $554.3/10^6$ |
| | proportion of residual spherical particles *4 | $10.3/10^6$ | $81.5/10^6$ | $199.1/10^6$ | $73.3/10^6$ |
| other lubricant | type | | | | |
| | particle diameter (μm) | | | | |
| | content in film (wt%) | | | | |
| film | evaluation of coarse protrusions *6 | × | × | × | × |

*4 A straight-hole membrane filter having hole openings of nominal opening size of 3 μm ($2x10^6$ pores/$cm^2$) was used.

*5 A straight-hole membrane filter having hole openings of nominal opening size of 2 μm($2x10^6$ pores/$cm^2$) was used.

*6 Protrusions showing second-order interference fringes were evaluated at a measurement wavelength of 0.54 μm.

As shown in Tables 3-1 and 3-2, a film made from a polyester composition in which the proportion of spherical coarse particles contained in the polymer is reduced to a specific value or less has extremely few coarse protrusions and is particularly useful as a base film for a magnetic recording medium.

Example 22

(1) Preparation of slurry of spherical silicone resin particles

(Pretreatment)

About 90 kg of ethylene glycol was added to about 10 kg of silicone resin particles (having an average particle diameter of 0.18 μm and a relative standard deviation of 0.30), which had been synthesized in an aqueous solution from methyl trialkoxy silane using an addition product of a nonylphenol with ethylene oxide and sodium dodecylbenzenesulfonate as emulsifiers, and the resulting mixture was wet-dispersed with a jetstream inductor mixer for 2 hours. Thereafter, the obtained slurry was subjected to wet-atomization treatment with a medium-stirring-type ultra-visco mill for 2 hours.

(Prefiltration)

Thereafter, the slurry was prefiltered once with a pleated filter of 2-μm openings.

(Absolute filtration)

This slurry was filtered with a filter having an bsolute filtration accuracy of 0.5 μm 5 times in succession. The residue and spherical residual particles of the slurry were measured.

(2) Production of master polymer containing spherical silicone resin particles

An ester interchange reaction was carried out between dimethyl terephthalate and ethylene glycol in the presence of manganese acetate as an ester interchange catalyst, antimony trioxide as a polymerization catalyst and phosphorous acid as a stabilizer in accordance with a commonly used method, and in the last stage of the ester interchange reaction, the slurry of spherical silicone resin particles prepared in (1) was added in an equivalent amount of 0.4 wt% in terms of the particles based on dimethyl terephthalate. Thereafter, the polymerization reaction was carried out to obtain polyethylene terephthalate having an intrinsic viscosity (in orthochlorophenol, at 35°C) of 0.62.

(3) Formation of polyester film

Master pellets of polyethylene terephthalate containing the particles of other lubricants of different types and pellets of polyethylene terephthalate containing no lubricant were produced, separately from the pellets of a master polymer containing the spherical silicone resin particles obtained in (2), in accordance with a commonly used method. The master pellets, the pellets obtained in (2) and the pellets containing no lubricant were mixed together in a ratio shown in Table 4. The resulting mixture was dried at 170°C for 3 hours, supplied to the hopper of an extruder and molten at a temperature of 280 to 300°C. This molten polymer was extruded onto a rotary cooling drum having a surface temperature of 20°C through a 1-mm slit die and quenched to give an unstretched film. This unstretched film was preheated at 75°C, stretched to 3.6 times between low-speed and high-speed rolls while heated with a single IR heater having a surface temperature of 900°C from 15 mm above the rolls, and quenched. Subsequently, the stretched film was supplied to a stenter to be stretched to 3.7 times in a transverse direction at 105°C. The obtained biaxially oriented film was heat-set at 205°C for 5 seconds to give a heat-set biaxially oriented polyester film having a thickness of 15 μm. The characteristic properties of the obtained polymer and the characteristic properties of the film are shown in Table 4.

Example 23

A film was obtained in the same manner as in Example 22 except that filtration with a filter having an absolute filtration accuracy of 0.5 μm was carried out only once in the preparation of a slurry. The characteristic properties of the obtained polymer and the characteristic properties of the film are shown in Table 4.

Example 24

A master polymer containing spherical silicone resin particles was produced using methyl-2,6-naphthalene dicarboxylate in place of dimethyl terephthalate and a polyester was formed into a film. The film was obtained in the same manner as in Example 22 except that the surface temperature of the rotary cooling drum was changed to 60°C, the preheating temperature at the time of stretching in a longitudinal direction was changed to 120°C, the surface temperature of the IR heater was changed to 950°C, the temperature at the time of stretching in a transverse direction was changed to 125°C and the heat setting temperature and time were changed to 215°C and 10 seconds. The characteristic properties of the obtained polymer and the characteristic properties of the film are shown in Table 4.

Example 25

A film was obtained in the same manner as in Example 22 except that 0.05 wt% of alumina (of a θ-type crystal form) having an average particle diameter of 0.22 μm was contained in the formation of a polyester film. The characteristic properties of the obtained polymer and the characteristic properties of the film are shown in Table 4. A slurry was prepared and a master polymer was produced in the same manner as in the steps (1) and (2), respectively, and the alumina was blended with the polymer at the time of film formation.

Example 26

A film was obtained in the same manner as in Example 22 except that 0.03 wt% of spherical silica having an average particle diameter of 0.10 μm and a relative standard deviation of 0.12 was contained in the formation of a polyester film. The characteristic properties of the obtained polymer and the characteristic properties of the film are shown in Table 4. A slurry was prepared in the same manner as in the step (1) except that the spherical silica was not subjected to wet-atomization treatment with a medium-stirring-type ultra-visco mill in the preparation of a slurry. A master polymer was produced in the same manner as in the step (2), and the spherical silica was blended with the polymer at the time of film formation.

Example 27

A film was obtained in the same manner as in Example 22 except that the spherical particles were changed to cross-linked polystyrene particles (having an average particle diameter of 0.18 μm and a relative standard deviation of 0.5) and the concentration of the slurry was changed to about 5 wt% in the preparation of the slurry. The characteristic properties of the obtained polymer and the characteristic properties of the film are shown in Table 4.

Example 28

A film was obtained in the same manner as in Example 22 except that the spherical particles were changed to silica particles (having an average particle diameter of 0.06 μ m and a relative standard deviation of 0.15) and the slurry was not treated with a medium stirring type ultra-visco mill. The characteristic properties of the obtained polymer and the characteristic properties of the film are shown in Table 4.

Comparative Example 12

A film was obtained in the same manner as in Example 22 except that filtration with a filter having an absolute filtration accuracy of 0.5 μm was not carried out in the preparation of a slurry. The characteristic properties of the obtained polymer and the characteristic properties of the film are shown in Table 4. The particle diameter ratio of the spherical coarse particle was 1.08.

Comparative Example 13

A film was obtained in the same manner as in Example 22 except that prefiltration with a pleated filter of 2-μm openings and filtration with a filter having an absolute filtration accuracy of 0.5 μm were not carried out in the preparation of a slurry. The characteristic properties of the obtained polymer and the characteristic properties of the film are shown in Table 4. The particle diameter ratio of the spherical coarse particle was 1.08.

Comparative Example 14

A film was obtained in the same manner as in Example 27 except that prefiltration with a pleated filter of 2-µm openings and filtration with a filter having an absolute filtration accuracy of 0.5 µm were not carried out in the preparation of a slurry. The characteristic properties of the obtained polymer and the characteristic properties of the film are shown in Table 4. The particle diameter ratio of the spherical coarse particle was 1.10.

Comparative Example 15

A film was obtained in the same manner as in Example 28 except that prefiltration with a pleated filter of 2-µm openings and filtration with a filter having an absolute filtration accuracy of 0.5 µm were not carried out in the preparation of a slurry. The characteristic properties of the obtained polymer and the characteristic properties of the film are shown in Table 4. The particle diameter ratio of the spherical coarse particle was 1.01.

Table 4

| | | Ex.22 | Ex.23 | Ex.24 *1 | Ex.25 *2 | Ex.26 *3*7 | Ex.27 | Ex.28 |
|---|---|---|---|---|---|---|---|---|
| inert particles ① (spherical) | type | silicone resin particle | silicone resin particle | silicone resin particle | silicone resin particle | silicone resin particle | cross-linked polystyrene particle | silica particle |
| | average particle diameter (μm) | 0.18 | 0.18 | 0.18 | 0.18 | 0.18 | 0.18 | 0.06 |
| inert particles ② (spherical) | type | - | - | - | - | spherical silica | - | - |
| | average particle diameter (μm) | - | - | - | - | 0.1 | - | - |
| other lubricant | type | - | - | - | alumina | - | - | - |
| | average particle diameter (μm) | - | - | - | 0.22 | - | - | - |
| slurry | proportion of residue *4 | ≦0.002 | ≦0.002 | ≦0.002 | ≦0.002 | ≦0.002 | ≦0.002 | ≦0.002 |
| | proportion of residue *6 | ≦0.002 | 0.005 | ≦0.002 | ≦0.002 | ≦0.002 | ≦0.002 | ≦0.002 |
| | proportion of residual spherical particle *4 | $0.04/10^7$ | $0.05/10^7$ | $0.04/10^7$ | $0.04/10^7$ | ① $0.04/10^7$<br>② $0.008/10^7$ | $0.06/10^7$ | $0.01/10^7$ |
| | proportion of residual spherical particle *6 | $9.1/10^6$ | $390/10^6$ | $8.1/10^6$ | $8.1/10^6$ | ① $8.1/10^6$<br>② $1.5/10^6$ | $92.5/10^6$ | $7.3/10^7$ |

Ex.: Example

Table 4 (continued)

| | | Ex.22 | Ex.23 | Ex.24 *1 | Ex.25 *2 | Ex.26 *3*7 | Ex.27 | Ex.28 |
|---|---|---|---|---|---|---|---|---|
| polymer | proportion of residual spherical particles *4 | $0.06/10^7$ | $0.05/10^7$ | $0.04/10^7$ | $0.03/10^7$ | ① $0.04/10^7$<br>② $0.01/10^7$ | $0.08/10^7$ | $0.02/10^7$ |
| | proportion of residual spherical particles *6 | $7.3/10^6$ | $403.3/10^6$ | $7.4/10^6$ | $8.2/10^6$ | ① $7.9/10^6$<br>② $1.0/10^6$ | $88.8/10^6$ | $6.4/10^7$ |
| evaluation of coarse protrusions on film *8 | | ◎ | ○ | ◎ | ◎ | ◎ | ◎ | ◎ |

Ex.: Example

Table 4 (continued)

| | | C.Ex.12 | C.Ex.13 | C.Ex.14 | C.Ex.15 |
|---|---|---|---|---|---|
| inert particles ① (spherical) | type | silicone resin particle | silicone resin particle | cross-linked polystyrene particle | silica particle |
| | average particle diameter ($\mu m$) | 0.18 | 0.18 | 0.18 | 0.06 |
| inert particles ② (spherical) | type | - | - | - | - |
| | average particle diameter ($\mu m$) | - | - | - | - |
| other lubricant | type | - | - | - | - |
| | average particle diameter ($\mu m$) | - | - | - | - |
| slurry | proportion of residue *4 | 0.004 | 0.009 | 0.01 | 0.003 |
| | proportion of residue *6 | 0.01 | 0.02 | - | - |
| | proportion of residual spherical particle *4 | $7.1/10^6$ | $44.2/10^6$ | $74.4/10^6$ | $4.3/10^6$ |
| | proportion of residual spherical particle *6 | $1005.3/10^6$ | $4957.5/10^6$ | $7271.5/10^6$ | $897.2/10^6$ |

C.Ex.: Comparative Example

Table 4 (continued)

| | | C.Ex.12 | C.Ex.13 | C.Ex.14 | C.Ex.15 |
|---|---|---|---|---|---|
| polymer | proportion of residual spherical particle *4 | $6.3/10^6$ | $39.1/10^6$ | $71.1/10^6$ | $3.8/10^6$ |
| | proportion of residual spherical particle *6 | $970.0/10^6$ | $5203.3/10^6$ | $6997.0/10^6$ | $780.8/10^6$ |
| evaluation of coarse protrusions on film *8 | | × | × | × | × |

*1 Evaluated with polyethylene-2,6-naphthalate in place of polyethylene terephthalate.

*2 0.05 wt% of alumina having an average particle diameter of 0.22 μm was contained in the film formation.

*3 0.03 wt% of spherical silica having an average particle diameter of 0.1 μm was contained in the film formation.

*4 A straight-hole membrane filter of nominal opening size of 3 μm ($2x10^6$ pores/$cm^2$) was used.

*6 A straight-hole membrane filter of nominal opening size of 0.6 μm ($3x10^7$ pores/$cm^2$) was used.

*7 ① silicone/② silica

*8 Coarse protrusions having a maximum diameter of 1 μm or more were observed through a differential interference microscope.

## Claims

1. A slurry comprising spherical fine particles which have an average particle diameter of 1.5 μm or less and a dispersion medium dispersing the spherical fine particles, the amount of the residue of the slurry after filtration with a straight-hole membrane filter having hole openings of nominal opening size of 3 μm being 0.01 wt% or less based on the total weight of all the fine particles and the residue containing only a maximum of 5 spherical residual particles based on one million particles out of all the fine particles.

2. The slurry of claim 1, wherein the spherical fine particles have an average particle diameter of 0.7 to 1.5 μm.

3. The slurry of claim 1, wherein the spherical fine particles have an average particle diameter more than or equal to 0.2 μm and less than 0.7 μm and only a maximum of 100 spherical residual particles are contained in the residue left after filtration with a straight-hole membrane filter having openings of nominal opening size of 2 μm based on one million particles out of all the fine particles.

4. The slurry of claim 3, wherein the residue left after filtration with the straight-hole membrane filter having openings of nominal opening size of 2 μm is 0.01 wt% or less based on the total weight of all the fine particles.

5. The slurry of claim 1, wherein the spherical fine particles have an average particle diameter less than 0.2 μm and only a maximum of 500 spherical residual particles are contained in the residue left after filtration with a straight-hole membrane filter having openings of nominal opening size of 0.6 μm based on one million particles out of all the fine particles.

6. The slurry of claim 5, wherein the residue left after filtration with a straight-hole membrane filter having openings of nominal opening size of 0.6 μm is 0.01 wt% or less based on the total weight of all the fine particles.

7. The slurry of claim 1, wherein the spherical fine particles are spherical organic polymer particles or spherical inorganic particles.

8. The slurry of claim 1, wherein the spherical fine particles have a ratio of the maximum diameter to the minimum diameter of 1.0 to 1.2.

9. The slurry of claim 1, wherein the dispersion medium is a liquid medium.

10. The slurry of claim 1, which contains the spherical fine particles in an amount of 5 to 40 wt% and the dispersion medium in an amount of 95 to 60 wt%.

11. A polyester composition comprising 100 parts by weight of an aromatic polyester and 0.001 to 5 parts by weight of spherical fine particles that have an average particle diameter of 1.5 μm or less and that contain only a maximum of 5 spherical particles having a particle diameter more than 3 μm based on one million particles out of all the fine particles.

12. The polyester composition of claim 11, wherein the spherical fine particles have an average particle diameter of 0.7 to 1.5 μm.

13. The polyester composition of claim 11, wherein the spherical fine particles have an average particle diameter more than or equal to 0.2 μm and less than 0.7 μm and contain only a maximum of 100 spherical particles having a particle diameter of more than 2 μm based on one million particles out of all the fine particles.

14. The polyester composition of claim 11, wherein the spherical fine particles have an average particle diameter less than 0.2 μm and contain only a maximum of 500 spherical particles having a particle diameter more than 0.6 μm based on one million particles out of all the fine particles.

15. The polyester composition of claim 11, wherein the aromatic polyester is selected from the group consisting of polyalkylene terephthalate and polyalkylene naphthalene dicarboxylate.

16. The polyester composition of claim 11, which further contains non-spherical fine particles having an average particle diameter of 0.01 to 1.5 μm in an amount of 0.01 to 2 parts by weight based on 100 parts by weight of the aromatic

polyester.

**17.** The polyester composition of claim 13, which further contains non-spherical fine particles having an average particle diameter of 0.01 to 0.7 μm in an amount of 0.01 to 2 parts by weight based on 100 parts by weight of the aromatic polyester.

**18.** The polyester composition of claim 14, which further contains non-spherical fine particles having an average particle diameter of 0.01 to 0.6 μm in an amount of 0.01 to 2 parts by weight based on 100 parts by weight of the aromatic polyester.

**19.** A biaxially oriented polyester film made from the polyester composition of claim 11, claim 12, claim 13, claim 16, claim 17 or claim 18.

**20.** The film of claim 19, which shows 15 or less interference fringes of the third or higher order per 15 $cm^2$ at a measurement light wavelength of 0.54 μm.

**21.** A biaxially oriented polyester film made from the polyester composition of claim 14.

**22.** The film of claim 21, which has 10 or less protrusions having a maximum diameter of 1 μm or more per 0.25 $cm^2$ when visually counted by a differential interference microscope.

European Patent Office

# EUROPEAN SEARCH REPORT

Application Number
EP 98 30 9215

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Section Ch, Week 9206<br>Derwent Publications Ltd., London, GB;<br>Class A23, AN 92-044412<br>XP002096625<br>& JP 03 287655 A (TORAY IND INC)<br>, 18 December 1991<br>* abstract * | 1-22 | C08K7/18<br>C08L67/02<br>C08J5/18<br>//(C08L67/02, 67:02,101:00) |
| Y | WO 94 13486 A (HOECHST AG ;HOECHST CELANESE CORP (US); BENNETT CYNTHIA (DE); CHOE) 23 June 1994<br>* page 23 - page 24; example 1 *<br>* claims 1-22 * | 1-22 | |
| Y | EP 0 257 611 A (DIAFOIL CO LTD)<br>2 March 1988<br>* table 11 *<br>* claims 1-40 * | 1-22 | |

TECHNICAL FIELDS SEARCHED (Int.Cl.6)

C08K
C08L
C08J

The present search report has been drawn up for all claims

| Place of search | Date of completion of the search | Examiner |
|---|---|---|
| THE HAGUE | 15 March 1999 | Siemens, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 98 30 9215

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-1999

| Patent document cited in search report | Publication date | Patent family member(s) | Publication date |
|---|---|---|---|
| WO 9413486 A | 23-06-1994 | EP 0710180 A | 08-05-1996 |
| | | JP 8504470 T | 14-05-1996 |
| | | US 5674589 A | 07-10-1997 |
| EP 0257611 A | 02-03-1988 | JP 2516612 B | 24-07-1996 |
| | | JP 63199244 A | 17-08-1988 |
| | | JP 7052506 B | 05-06-1995 |
| | | JP 63247913 A | 14-10-1988 |
| | | JP 63289029 A | 25-11-1988 |
| | | JP 7031802 B | 10-04-1995 |
| | | JP 63308723 A | 16-12-1988 |
| | | JP 7050524 B | 31-05-1995 |
| | | JP 63311622 A | 20-12-1988 |
| | | JP 8002958 B | 17-01-1996 |
| | | JP 63312319 A | 20-12-1988 |
| | | JP 7070042 B | 31-07-1995 |
| | | JP 63316316 A | 23-12-1988 |
| | | JP 7070420 B | 31-07-1995 |
| | | JP 63316419 A | 23-12-1988 |
| | | JP 8026138 B | 13-03-1996 |
| | | JP 63317523 A | 26-12-1988 |
| | | JP 7119292 B | 20-12-1995 |
| | | JP 63317533 A | 26-12-1988 |
| | | JP 2566578 B | 25-12-1996 |
| | | JP 64000128 A | 05-01-1989 |
| | | JP 7100757 B | 01-11-1995 |
| | | JP 64000155 A | 05-01-1989 |
| | | JP 8031391 B | 27-03-1996 |
| | | JP 64001217 A | 05-01-1989 |
| | | AT 109493 T | 15-08-1994 |
| | | DE 3750319 D | 08-09-1994 |
| | | DE 3750319 T | 23-03-1995 |
| | | ES 2056802 T | 16-10-1994 |
| | | KR 9606092 B | 08-05-1996 |
| | | US 5106681 A | 21-04-1992 |
| | | US 4990400 A | 05-02-1991 |

EPO FORM P0459

For more details about this annex : see Official Journal of the European Patent Office, No. 12/82